# EUROPÄISCHE PATENTSCHRIFT

(11) **EP 3 460 930 B1**
(45) Veröffentlichungstag und Bekanntmachung des Hinweises auf die Patenterteilung: **14.12.2022**
(21) Anmeldenummer: 18195917.2
(22) Anmeldetag: 21.09.2018
(51) Int. Cl.: H02G 3/04, H02G 3/12

(54) **INSTALLATIONSDOSE FÜR DIE ELEKTROINSTALLATION**
INSTALLATION BOX FOR ELECTRICAL INSTALLATION
BOÎTIER D'INSTALLATION POUR L'INSTALLATION ÉLECTRIQUE

(30) Priorität: 21.09.2017 DE 202017105736 U
(43) Veröffentlichungstag der Anmeldung: 27.03.2019
(73) Patentinhaber: f-tronic GmbH, 66131 Saarbrücken (DE)
(72) Erfinder: Fohs, Peter, 66399 Mandelbachtal (DE)
(74) Vertreter: Keil & Schaafhausen Patentanwälte PartGmbB

(56) Entgegenhaltungen:
- EP-A1- 2 472 685
- WO-A1-2017/091839
- DE-U1- 29 500 324
- DE-U1-202014 104 064
- DE-U1-202016 104 239
- GB-A- 2 325 728

## Beschreibung

Die vorliegende Erfindung betrifft eine Installationsdose nach dem Oberbegriff des Anspruchs 1.

Es ist eine derartige Installationsdose bekannt, die aus einer topfförmigen Dose mit einem Inneneinsatz besteht. Der Inneneinsatz ist in seinen Abmessungen für einen formschlüssigen Einsatz in das Innere der topfförmigen Dose angepasst.

Die topfförmige Dose besteht aus intumeszierendem Material. In diese topfförmige Dose wird ein Inneneinsatz eingesetzt. Der Inneneinsatz ist dabei ebenfalls eine topfförmige Dose, die aus den Kunststoffmaterialien besteht, die üblicherweise für Installationsdosen verwendet werden.

Aus der EP 2 472 685 B1 ist eine Installationsdose für die Hohlwandinstallation bekannt, die aus einer Außendose besteht, in die eine Innendose aus intumeszierendem Material einsetzbar ist. Die Innendose ist in ihren Abmessungen der Außendose insoweit angepasst, dass diese formschlüssig in die Außendose einsetzbar ist. es ist eine Ausführungsform der Innendose beschrieben, die so ausgestaltet ist, dass diese Innendose selbst keinen Boden aufweist und sich damit als Hülse nur in dem Bereich der Außendose auf deren Innenseite erstreckt, in dem die Außendose zylinderförmig ist. Die Innendose weist dabei Öffnungen an den Stellen auf, an denen die Einführung von Kabeln oder Installationsrohren in die Installationsdose vorgesehen ist.

Aus der GB 2 325 728 A ist ein Elektroinstallationsmaterial bekannt, das als Aufnahmeraum für die Installation von Leuchten in Hohldecken ausgebildet ist. Ein topfförmiges Installationsteil ist aus Keramik oder Metall gefertigt und auf seiner Innenseite mit einem intumeszierenden Material beschichtet. Das Elektroinstallationsmaterial weist weiterhin Öffnungen aus zur Belüftung und zur Wärmeabfuhr.

Aus der DE 20 2016 104 239 U1 ist eine Installationsdose bekannt, die aus Kunststoff besteht und auf ihrer Außenseite eine Beschichtung aus intumeszierendem Material aufweist.

Aus der DE 20 2014 104 064 U1 ist eine Installationsdose bekannt, die in ihrem Inneren eine Ausnehmung aufweist, in die ein Element aus einem intumeszierenden Material einsetzbar ist.

Derartige Installationsdosen können als sogenannte Hohlwanddosen ausgestaltet sein. Diese Hohlwanddosen werden bei Hohlwandkonstruktionen verwendet, bei denen die Hohlwandkonstruktion in Ständerbauweise aufgebaut wird, die dann mit einer entsprechenden Beplankung versehen wird. In diese Beplankung werden kreisförmige Öffnungen eingebracht, in die die Hohlwandinstallationsdosen eingesetzt werden. Diese Hohlwandinstallationsdosen sind topfförmig aufgebaut mit einer kreisförmigen Öffnung sowie einer Anlageschulter zur Anlage an der Außenseite der Beplankung. Die Hohlwandinstallationsdose wird in eine passgenaue Öffnung eingesetzt. Diese Hohlwandinstallationsdose werden beispielsweise zur Montage und zur Kontaktierung von Lichtschaltern und Steckdosen verwendet.

Wegen der definierten Montagepositionen für die Lichtschalter und die Steckdosen kann es bei der Elektroinstallation für benachbarte Räume, die durch eine Hohlwandkonstruktion getrennt sind, dazu kommen, dass die Öffnungen für die Lichtschalter und eventuell auch für die Steckdosen der benachbarten Räume spiegelbildlich an denselben Position der beiden Beplankungen der Hohlwand ausgeführt werden müssen. Dies erweist sich im Hinblick auf den Brandschutz insofern als problematisch, weil sich Rauchgase und eventuell auch offene Flammen durch diese Öffnungen von einem Raum in den benachbarten Raum ausbreiten können. Dies gilt auch dann, wenn die Beplankungen der Hohlwandkonstruktion im Übrigen eine Feuerfestigkeit der Klasse F90 aufweisen.

Deswegen ist es vorgesehen, dass die bekannte Installationsdose einen Außeneinsatz aus intumeszierendem Material aufweist. Dieses intumeszierende Material - üblicherweise sogenannter Blähgraphit - dehnt sich bei Erwärmung stark aus. Dadurch wird die Öffnung geschlossen, die sich ansonsten aus der Öffnung der Installationsdose ergibt. Das Übertreten von Rauchgasen oder auch offenen Flammen aus einem Raum in einen benachbarten Raum wird dadurch vorteilhaft vermieden. Bei dieser Ausgestaltung ist das intumeszierende Material auf der Außenseite der Installationsdose im Inneren der Hohlwand. Bei der Ausdehnung stützt sich das intumeszierende Material an Füllmaterialien im Inneren der Hohlwand ab. Dieses Füllmaterial kann Steinwolle oder auch Glaswolle sein. Dieses Füllmaterial wird als ergänzender Brandschutz sowie auch zur Wärme- und Schalldämmung eingebracht. Es ist weiterhin bekannt, eine Außenstruktur für die Installationsdose aus feuerfestem Material vorzusehen. Das intumeszierende Material kann sich dabei an der Außenstruktur der Installationsdose abstützen, so dass die Installationsdose damit unabhängig von weiteren Installationsbedingungen wird. Dies betrifft insbesondere den Effekt, dass sich das intumeszierende Material bei dessen Erwärmung so ausdehnt, dass dadurch die Öffnung verschlossen wird.

Derartige Brandschutzdosen werden nicht nur bei der Hohlwandinstallation verwendet. Es können auch bauseitige Umgebungsbedingungen vorliegen, bei denen die Wände zwar massiv ausgeführt sind, aber nur eine geringe Dicke von beispielsweise 10 cm aufweisen. Auch bei solchen Wänden besteht das Problem, dass bei der Elektroinstallation von Lichtschaltern in benachbarten Räumen die Einbauöffnung für die Installationsdosen mehr oder weniger vollständig durch diese dünne Wand durchgebohrt wird. Auch bei diesen Installationsbedingungen besteht dieselbe Problematik hinsichtlich des Brandschutzes wie bei Hohlwandinstallationen.

Der vorliegenden Erfindung liegt die Aufgabe zu Grunde, die Installationsdose in ihrem Aufbau zu vereinfachen.

Diese Aufgabe wird nach der vorliegenden Erfindung gemäß Anspruch 1 gelöst durch eine Installationsdose für die Elektroinstallation, die aus einer topfförmigen Dose mit einem Inneneinsatz besteht. Der Inneneinsatz ist in seinen Abmessungen für einen formschlüssigen Einsatz in das Innere der topfförmigen Dose angepasst. Außerdem besteht der Inneneinsatz zumindest teilweise aus einem intumeszierenden Material. Erfindungsgemäß ist eine formschlüssig schließende Rastverbindung mit wenigstens einem federelastisch gelagerten Rastmittel an dem Inneneinsatz oder der topfförmigen Dose angeordnet. Dieses Rastmittel wirkt mit einem Gegenrastmittel zusammen, das entsprechend an der topfförmigen Dose oder dem Inneneinsatz angebracht ist.

Bei dieser Ausführungsform nach der vorliegenden Erfindung besteht die topfförmige Dose aus Kunststoffmaterial, das üblicherweise für Installationsdosen verwendet wird, insbesondere für Hohlwandinstallationsdosen. Dieses Material kann beispielsweise Polypropylen sein, insbesondere langfaseriges Polypropylen.

Die Installationsdose nach der vorliegenden Erfindung ist so aufgebaut, die topfförmige Dose (d.h. der "Außenteil" der Installationsdose) aus Kunststoffmaterial besteht, das üblicherweise für Installationsdosen verwendet wird, insbesondere für Hohlwandinstallationen. Der Inneneinsatz besteht zumindest teilweise aus einem intumeszierenden Material.

Für die Installationsdose nach der vorliegenden Erfindung ist es wichtig, dass die topfförmige Dose aus einem ausreichend temperaturbeständigen Material besteht. Das intumeszierende Material beginnt ab einer Temperatur von 200 Grad Celsius sich auszudehnen. Das heißt, dass die topfförmige Dose aus einem Material bestehen muss, das bis ca. 250 oder 300 Grad Celsius formstabil bleibt und dem sich ausdehnenden intumeszierenden Material eine ausreichende Abstützung bietet, so dass sich das intumeszierende Material in die Öffnung hinein ausdehnt und damit diese Öffnung verschließt.

Damit weist die Installationsdose nach der vorliegenden Erfindung einige wesentliche Vorteile auf.

Durch die separate Fertigung der topfförmigen Dose und des Inneneinsatzes wird die Fertigung vereinfacht gegenüber einer Beschichtung einer Dose mit dem intumeszierenden Material. Bei einer Beschichtung müssen die Temperaturen im Fertigungsprozess exakt eingehalten werden, damit sich das intumeszierende Material nicht bereits bei der Fertigung aufbläht. Diese Probleme werden bei der separaten Fertigung der topfförmigen Dose und des Inneneinsatzes vermieden.

Bei der fertig montierten Installationsdose bietet die topfförmige Dose die Abstützung für den Fall, dass sich das intumeszierende Material ausdehnt. Die Abstützung für das intumeszierende Material wird bei der Dose nach der vorliegenden Erfindung durch die Installationsdosen selbst gewährleistet. Damit wird die Installationsdose auch bei Hohlwandkonstruktionen einsetzbar, die ganz ohne Füllmaterial für die Hohlwand gebaut werden. Die fehlende Abstützung für das intumeszierende Material im Inneren der Hohlwand spielt dann praktische keine Rolle, weil die Installationsdose für sich selbst eine ausreichende Abstützung für das sich ausdehnenden intumeszierende Material bietet.

Dennoch ist die Installationsdose nach der vorliegenden Erfindung lediglich aus zwei ineinander angeordneten Teilen aufgebaut.

Durch das federelastisch gelagerte Rastmittel wird vorteilhaft erreicht, dass der Inneneinsatz bei der Montage fest an seiner Sollposition in der topfförmigen Dose gehalten wird.

Bei der Installationsdose nach Anspruch 2 besteht der Inneneinsatz aus einer Hülse, deren Abmessungen so an die topfförmige Dose angepasst sind, dass der Inneneinsatz sich nach seinem Einsetzen in die topfförmige Dose in dem Bereich der topfförmigen Dose befindet, in dem diese zylinderförmig ist.

Dies erweist sich insofern als vorteilhaft, weil der Inneneinsatz damit einfach hergestellt werden kann. Die Menge des intumeszierenden Materials ist dabei dennoch ausreichend, um die Öffnung durch das sich ausdehnende intumeszierende Material zu verschließen.

Diese Ausgestaltung erweist sich auch insofern als vorteilhaft, weil sich gerade im Bodenbereich der topfförmigen Dose üblicherweise die Stellen befinden, an denen Kabel und ggf. Installationsrohre in die Installationsdose eingeführt werden sollen. Diese Stellen werden dabei vorteilhaft von dem Inneneinsatz freigehalten, so dass die Einführung der Kabel und / oder Leerrohre in einfacher Weise möglich ist.

Bei der Ausgestaltung nach Anspruch 3 weist der Inneneinsatz Aussparungen und/oder Ausbrechflächen in den Bereichen auf, an denen bei einem in die topfförmige Dose eingesetzten Inneneinsatz Ausbrechflächen oder weichelastische Überdeckungen über Öffnungen der topfförmigen Dose vorhanden sind zur Einführung von Kabeln oder Installationsrohren in die Installationsdose.

Bei den Installationsdosen ist es bekannt, Ausbrechflächen vorzusehen, die Sollbruchstellen aufweisen. Dadurch können diese Ausbrechflächen aufgebrochen werden, so dass Öffnungen in der Wand der Installationsdose entstehen, durch die Kabel oder Leerrohre in die Installationsdose eingeführt werden können. Alternativ zu diesen Ausbrechflächen können diese Öffnungen in der Installationsdose auch durch weichelastischen Kunststoff überdeckt sein. Der weichelastische Kunststoff kann auch als Membran in die Öffnungen eingespritzt sein. Ebenso ist es möglich, Einsätze aus weichelastischem Kunststoff vorzusehen, die in die Öffnungen in der Installationsdose eingesetzt werden können. Es ist dann möglich, die Ausbrechflächen vorzusehen. Wenn Kabel oder Leerrohre eingeführt werden sollen, können die entsprechenden Ausbrechflächen ausgebrochen werden. Die sich dadurch ergeben Löcher können durch die Einsätze aus dem weichelastischen Kunststoff wieder verschlossen werden. Die Kabel oder Leerrohre können dann durch den weichelastischen Kunststoff durchgeschoben werden.

Wenn der Inneneinsatz gerade an diesen Stellen Aussparungen aufweist, lässt sich ein Inneneinsatz so gestalten, dass dieser Inneneinsatz die Innenfläche der topfförmigen Dose möglichst weitgehend überdeckt, aber dennoch die Stellen frei lässt, an denen eventuell Kabel oder Leerrohre in die Installationsdose eingeführt werden sollen.

Bei der Ausgestaltung nach Anspruch 4 weist die Installationsdose eine kreisförmige Einlassöffnung mit einer umlaufenden Anlageschulter auf. Auf der Unterseite der Anlageschulter ist ein kreisförmiger Ring aus intumeszierendem Material angeordnet.

Durch diese Ausgestaltung wird das Ausfüllen der Öffnung in der Beplankung der Hohlwand bzw. in dem Loch in der Wand durch das sich ausdehnenden intumeszierende Material effektiv verschlossen.

Bei der Ausgestaltung nach Anspruch 5 befindet sich auf der Außenseite der topfförmigen Dose an der Seite der kreisförmigen Öffnung der topfförmigen Dose ein Ring aus intumeszierendem Material.

Diese Ausgestaltung nach Anspruch 5 kann alternativ oder zusätzlich zur Ausgestaltung nach Anspruch 4 die Öffnung in der Beplankung der Hohlwand bzw. in dem Loch in der Wand effektiv verschließen.

Ein Ausführungsbeispiel der Erfindung ist in der Zeichnung dargestellt. Es zeigt dabei im Einzelnen:
- Fig. 1:: eine erste Ausführungsform einer topfförmigen Dose mit einem Innenteil und
- Fig. 2:: die topfförmige Dose mit dem eingesetzten Innenteil in einer Draufsicht auf die Installationsdose in Einsetzrichtung für einzubauende Lichtschalter, Steckdoseneinsätze oder andere elektrotechnische oder elektronische Bauteile.

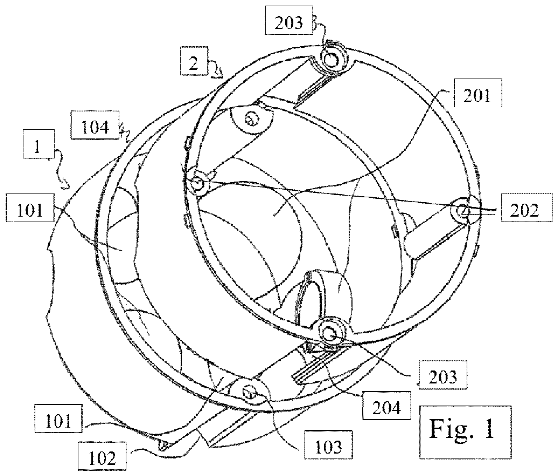

Figur 1 zeigt eine erste Ausführungsform einer topfförmigen Dose 1 mit einem Innenteil 2.

Es ist zu sehen, dass das Innenteil 2 in seinen Abmessungen und in seiner Form so ausgestaltet ist, dass dieses Innenteil 2 formschlüssig in die topfförmige Dose eingesetzt werden kann.

Wie eingangs beschrieben besteht das Innenteil 2 aus intumeszierendem Material. Die topfförmige Dose 1 besteht aus üblichen Kunststoffen, die für die Herstellung von Installationsdosen verwendet werden. Dies kann beispielsweise eine PP-Langfaser (Polypropylen - Langfaser) sein. Ein solcher Kunststoff hat eine Temperaturstabilität bis ca. 250 Grad Celsius. Mit der Temperaturstabilität ist hierbei gemeint, dass sich das Material nicht verformt und auch noch ausreichend formstabil ist, um ein Widerlager für das sich ausdehnende intumeszierende Material dahingehend zu bilden, dass sich dieses intumeszierende Material in die Öffnung der Installationsdose ausdehnt und diese ausfüllt. Damit wird eine Sicherung gegen austretende Rauchgase sowie auch gegen austretende Flammen geschaffen.

Es ist zu sehen, dass sowohl die topfförmige Dose 1 als auch das Innenteil 2 jeweils Bereiche 101 und 201 aufweisen, die für die Einführung von Kabeln oder Leerrohren in die Installationsdose vorgesehen sind. Wie in der Beschreibungseinleitung erörtert, sind die Bereiche 101 als Ausbrechflächen ausgebildet oder mit weichelastischem Kunststoff überzogen, so dass die einzuführenden Kabel oder Leerrohre durch diesen weichelastischen Kunststoff in die Installationsdose eingeschoben werden können.

Alternativ können die Öffnungen der Bereiche 101 auch mit einer Membran aus weichelastischem Kunststoff ausgespritzt sein. Es können auch Einsatzstücke aus weichelastischem Kunststoff in diese Bereiche eingesetzt werden, nach dem entsprechende Ausbrechflächen geöffnet wurden.

Dies erweist sich als vorteilhaft, weil die Kabel bzw. Leerrohre von dem weichelastischen Kunststoff umschlossen werden. Dies hat Vorteile hinsichtlich einer Reduzierung der Schallübertragung und auch hinsichtlich der Minimierung von Zugluft. Im Brandfall bewirkt diese Abdichtung aus weichelastischem Material bereits vor dem Einsetzen des intumeszierenden Materials eine Abdichtung der Installationsdose.

Die entsprechenden Bereiche 201 korrespondieren mit den Bereichen 101 der topfförmigen Dose derart, dass die Bereiche 101 und 201 bei einem in die topfförmige Dose 1 eingesetzten Innenteil 2 übereinander liegen und auch hinsichtlich ihrer Größe jeweils übereinstimmen, soweit diese Bereiche 101 und 201 übereinander liegen.

Das Innenteil 2 weist Montagelöcher 202 auf, in die in an sich bekannter Weise Schrauben eingedreht werden können zur Befestigung von Rahmenelementen von einzusetzenden elektrotechnischen oder elektronischen Bauteilen.

Außerdem weisen die topfförmige Dose 1 und das Innenteil 2 noch miteinander korrespondierende Aufnahmen 203, 103 für Montageschrauben auf. Diese Montageschrauben verlaufen in den Ausnehmungen 102 und 204 sowohl der topfförmigen Dose 1 als auch des Innenteils 2. Durch das Anziehen der Montageschrauben werden Spannbratzen von der Unterseite der Installationsdose angezogen, die sich beim Anziehen nach außen über den Außenumfang der Installationsdose hinaus aufstellen und dabei die Beplankung der Hohlwand zur Befestigung der Installationsdose hintergreifen.

Wie eingangs beschrieben, kann auch intumeszierendes Material im Bereich der Anlageschulter 104 auf der der Beplankung zugewandten Seite der topfförmigen Dose 1 angebracht sein.

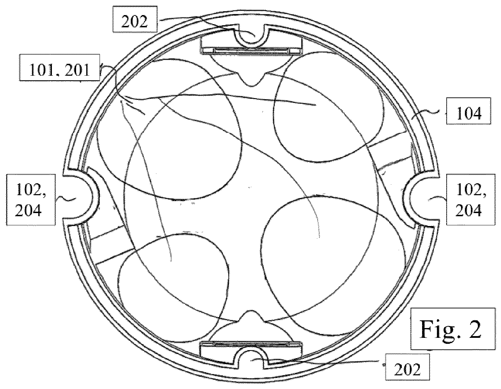

Figur 2 zeigt die topfförmige Dose 1 mit dem eingesetzten Innenteil 2 in einer Draufsicht auf die Installationsdose in Einsetzrichtung für einzubauende Lichtschalter, Steckdoseneinsätze oder andere elektrotechnische oder elektronische Bauteile. Gleiche Bauteile wie bei der Figur 1 sind mit identischen Bezugszeichen bezeichnet.

## Patentansprüche

1. Installationsdose für die Elektroinstallation, bestehend aus einer topfförmigen Dose (1) mit einem Inneneinsatz (2),
> wobei der Inneneinsatz (2) in seinen Abmessungen für einen formschlüssigen Einsatz in das Innere der topfförmigen Dose (1) angepasst ist,
> wobei der Inneneinsatz (2) zumindest teilweise aus einem intumeszierenden Material besteht.
**dadurch gekennzeichnet, dass** eine formschlüssig schließende Rastverbindung mit wenigstens einem federelastisch gelagerten Rastmittel an dem Inneneinsatz (2) oder der topfförmigen Dose (1) angeordnet ist, das mit einem Gegenrastmittel an der topfförmigen Dose (1) oder dem Inneneinsatz (2) zusammenwirkt.

2. Installationsdose nach Anspruch 1,
**dadurch gekennzeichnet, dass** der Inneneinsatz (2) aus einer Hülse besteht, deren Abmessungen so an die topfförmige Dose (1) angepasst sind, dass der Inneneinsatz (2) sich nach seinem Einsetzen in die topfförmige Dose (1) in dem Bereich der topfförmigen Dose (1) befindet, in dem diese zylinderförmig ist.

3. Installationsdose nach Anspruch 1 oder 2,
**dadurch gekennzeichnet, dass** der Inneneinsatz (2) Aussparungen und/oder Ausbrechflächen (201) in den Bereichen aufweist, an denen bei einem in die topfförmige Dose (1) eingesetzten Inneneinsatz (2) Ausbrechflächen oder weichelastische Überdeckungen (101) über Öffnungen der topfförmigen Dose (1) vorhanden sind zur Einführung von Kabeln oder Installationsrohren in die Installationsdose.

4. Installationsdose nach einem der Ansprüche 1 bis 3,
**dadurch gekennzeichnet, dass** die Installationsdose eine kreisförmige Einlassöffnung mit einer umlaufenden Anlageschulter (104) aufweist, wobei auf der Unterseite der Anlageschulter (104) ein kreisförmiger Ring aus intumeszierendem Material angeordnet ist.

5. Installationsdose nach einem der Ansprüche 1 bis 4,
**dadurch gekennzeichnet, dass** sich auf der Außenseite der topfförmigen Dose (1) an der Seite der kreisförmigen Öffnung der topfförmigen Dose (1) ein Ring aus intumeszierendem Material befindet.

## Claims

1. An installation box for the electrical installation, consisting of a pot-shaped box (1) having an inner insert (2),
- the dimensions of the inner insert (2) being adapted for a form-fitting insert into the interior of the pot-shaped box (1),
- the inner insert (2) consisting at least partially of an intumescent material,
**characterized in that** a form-fitting locking snap connection having at least one resiliently mounted locking means is arranged on the inner insert (2) or the pot-shaped box (1), the locking means interacting with a counter-locking means on the pot-shaped box (1) or the inner insert (2).

2. The installation box according to claim 1,
**characterized in that** the inner insert (2) consists of a sleeve, the dimensions of which are adapted to the pot-shaped box (1) such that the inner insert (2), after being inserted into the pot-shaped box (1), is located in the region of the pot-shaped box (1) in which it is cylindrical.

3. The installation box according to claim 1 or 2,
**characterized in that** the inner insert (2) comprises recesses and/or break-out surfaces (201) in the regions on which, with an inner insert (2) inserted into the pot-shaped box (1), break-out surfaces or flexible coverings (101) are present over openings in the pot-shaped box (1) for the introduction of cables or installation pipes into the installation box.

4. The installation box according to any one of claims 1 to 3,
**characterized in that** the installation box comprises a circular inlet opening having a circumferential contact shoulder (104), wherein a circular ring made of intumescent material is arranged on the underside of the contact shoulder (104).

5. The installation box according to any one of claims 1 to 4,
**characterized in that** a ring of intumescent material is located on the outside of the pot-shaped box (1) on the side of the circular opening of the pot-shaped box (1).

## Revendications

1. Boîtier d'installation pour l'installation électrique, composé d'un boîtier en forme de pot (1) avec un insert intérieur (2),
- dans lequel les dimensions de l'insert intérieur (2) sont adaptées pour un insert s'adaptant à la forme à l'intérieur du boîtier en forme de pot (1) ,
- dans lequel l'insert intérieur (2) est constitué au moins partiellement d'un matériau intumescent,
**caractérisé en ce qu'**une liaison de verrouillage à ajustement de forme avec au moins un moyen de verrouillage monté élastiquement est agencée sur l'insert intérieur (2) ou le boîtier en forme de pot (1), qui coopère avec un moyen de contre-verrouillage sur la boîtier en forme de pot (1) ou l'insert intérieur (2).

2. Boîtier d'installation selon la revendication 1,
**caractérisé en ce que** l'insert intérieur (2) est constitué d'un manchon dont les dimensions sont adaptées au boîtier en forme de pot (1), que l'insert intérieur (2), après son insertion dans le boîtier en forme de pot (1), se trouve dans la région du boîtier en forme de pot (1) dans laquelle il est cylindrique.

3. Boîtier d'installation selon la revendication 1 ou 2,
**caractérisé en ce que** l'insert intérieur (2) présente des évidements et/ou des surfaces de rupture (201) dans les zones où, dans le cas d'un insert intérieur (2) inséré dans le boîtier en forme de pot (1), des surfaces de rupture ou des couvercles flexibles (101) sur les ouvertures du boîtier en forme de pot (1) sont disponibles pour l'introduction de câbles ou de tuyaux d'installation dans le boîtier d'installation.

4. Boîtier d'installation selon une des revendications 1 à 3,
**caractérisé en ce que** le boîtier d'installation présente une ouverture d'entrée circulaire avec un épaulement de positionnement circonférentiel (104), dans lequel un anneau circulaire en matériau intumescent est disposé sur la face inférieure de l'épaulement de positionnement (104).

5. Boîtier d'installation selon une des revendications 1 à 4,
**caractérisé en ce que** sur la face extérieure du boîtier en forme de pot (1) sur le côté de l'ouverture circulaire du boîtier en forme de pot (1) se trouve un anneau de matériau intumescent.
